Europäisches Patentamt

European Patent Office

Office européen des brevets

(19)

(11) Numéro de publication : **0 445 011 B1**

(12) ## FASCICULE DE BREVET EUROPEEN

(45) Date de publication du fascicule du brevet :
**10.11.93 Bulletin 93/45**

(51) Int. Cl.⁵ : **B64G 1/40, B64G 1/10**

(21) Numéro de dépôt : **91400489.0**

(22) Date de dépôt : **22.02.91**

(54) **Satellite d'observation de type géostationnaire à système de manoeuvre d'apogée à ergols liquides et à plusieurs tuyères.**

(30) Priorité : **26.02.90 FR 9002366**
**13.07.90 FR 9008969**

(43) Date de publication de la demande :
**04.09.91 Bulletin 91/36**

(45) Mention de la délivrance du brevet :
**10.11.93 Bulletin 93/45**

(84) Etats contractants désignés :
**DE ES FR GB IT NL SE**

(56) Documents cités :
**EP-A- 0 113 622**
**FR-A- 2 640 579**
**IEEE - NATIONAL TELECOMMUNICATIONS**
**CONFERENCE HOUSTON, 4-6 décembre 1972**
**pages 36A1 - 36A8; P.T. BURR et al.: "The**
**synchronous meteorological satellite (SMS)**
**system"**

(56) Documents cités :
**AVIATION WEEK AND SPACE TECHNOLOGY**
**vol. 113, no. 11, septembre 1980, NEW YORK,**
**US pages 24 - 25; C. COVAULT: "New satellite**
**to sample data on weather by altitude"**
**JOURNAL OF SPACECRAFT & ROCKETS vol.**
**17, no. 2, mars - avril 1980, NEW YORK, US**
**pages 79 - 85; D.E. KOELLE: "Advanced tech-**
**nology for direct TV-broadcasting satellites"**

(73) Titulaire : **AEROSPATIALE SOCIETE**
**NATIONALE INDUSTRIELLE**
**37, Boulevard de Montmorency**
**F-75781 Paris Cédex 16 (FR)**

(72) Inventeur : **Maute, Patrick**
**10, Chemin de Cambernier Nord**
**F-06560 Valbonne (FR)**

(74) Mandataire : **Rinuy, Santarelli**
**14, avenue de la Grande Armée**
**F-75017 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne la structure générale de satellites, par exemple des satellites d'observation notamment terrestre. Elle vise tout particulièrement le cas de satellites stabilisés en autorotation ; elle concerne notamment, mais non exclusivement, les satellites météorologiques.

Des exemples de satellites géostationnaires de météorologie stabilisés en autorotation ont déjà été mis en oeuvre aux Etats-Unis, en Union Soviétique, au Japon ou en Europe au titre du programme d'observation météorologique appelé en abrégé WWW (WORLD WEATHER WATCH). On peut citer à ce propos les satellites GOES 1 et 4 pour les Etats-Unis, MOP en Europe et GOIS au Japon.

Les satellites d'observation terrestre ont toujours été, jusqu'à présent, à la fois stabilisés en autorotation et munis d'un système de manoeuvre d'apogée à ergols solides.

A l'heure actuelle, aussi bien aux Etats-Unis qu'en Europe notamment, divers projets ou avant-projets sont en cours pour la mise en place de satellites dits de deuxième génération par opposition à ceux déjà existants qualifiés de ce fait de première génération ; ces satellites de deuxième génération visent des performances, notamment en nombre de canaux et en précision, notablement supérieures à celles des satellites de première génération ; ceci s'accompagne d'une masse sèche bien supérieure à celle des satellites de première génération (de 800 à 1500 kg contre 300 à 350 kg environ précédemment).

Depuis l'époque où les satellites de première génération ont été conçus et lancés, une évolution importante a eu lieu dans le domaine de la propulsion des satellites, géostationnaires ou non : la mise en oeuvre des moteurs d'apogée à ergols solides est devenue obsolète au profit de systèmes de propulsion à ergols liquides.

Cette généralisation des ergols liquides au détriment des ergols solides s'explique par une meilleure impulsion spécifique, la possibilité de prévoir un système d'alimentation unifié pour le système de manoeuvre d'apogée et pour le système de correction d'orbite et de contrôle d'attitude, une meilleure flexibilité opérationnelle (possibilité d'une manoeuvre d'apogée en plusieurs phases) et enfin une meilleure flexibilité de concept (on remplit les réservoir en ergols liquides avant le lancement en fonction de la masse réelle, alors qu'avant il fallait choisir pendant la phase de développement le moteur à ergol solide avec son réservoir en fonction de la masse possible du satellite une fois fini). En fait, l'utilisation d'ergols liquides se traduit dans l'ensemble par un important gain de masse au lancement.

Une conséquence de cette évolution est qu'il n'existe pas en Europe à l'heure actuelle des moteurs d'apogée à ergols solides qui soient homologués et adaptés aux masses des satellites modernes (800 à 1500 kg de masse sèche).

En outre, la mise en oeuvre des tuyères d'apogée à ergols liquides pose un problème spécifique critique dans le cas des satellites d'observation (notamment de météorologie) stabilisés en autorotation.

En effet, la mission de tels satellites d'observation implique la prise d'images de la terre et/ou de son atmosphère dans des canaux infrarouges. Les détecteurs utilisés à cet effet doivent être refroidis à des températures basses, de l'ordre de 100 K, de manière à présenter des caractéristiques acceptables de rapport signal/bruit. Ces basses températures sont classiquement obtenues en plaçant le plan focal de l'instrument d'observation (là où sont situés les détecteurs infrarouges) sous un radiateur de forme tronconique, lui-même placé sur une face transversale du satellite, en regard du vide stellaire, afin de minimiser les flux d'énergie (notamment solaire) provenant de l'extérieur et susceptibles de gêner l'évacuation de calories par ce radiateur. La paroi latérale tronconique de ce radiateur est classiquement inclinée d'un angle légèrement supérieur à 23,5° par rapport à un plan transversal à l'axe d'autorotation et est polie soigneusement (il s'agit le plus souvent d'aluminium) de façon à avoir un excellent coefficient de spécularité et à rejeter en dehors du radiateur les éventuels rayons solaires incidents, même dans les cas les pires (en particulier, solstice d'hiver lorsque le radiateur est sur la face SUD).

Pour l'ensemble des satellites de première génération, le dégagement du champ de vue du radiateur passif vers l'espace froid (vers le SUD) était obtenu par éjection du moteur d'apogée à ergols solides après sa combustion ; le radiateur était situé juste derrière ce moteur d'apogée, au niveau de l'interface satellite/moteur d'apogée, le moteur d'apogée à ergols liquides ayant de ce point de vue l'avantage de constituer avec son réservoir un ensemble compact facilement éjectable.

Il est rappelé que la face opposée du satellite (face NORD) est classiquement occupée par les antennes de communication avec le sol, lesquelles comportent notamment de façon classique un mât de télécommunication disposé précisément selon l'axe d'autorotation du satellite.

Une telle possibilité d'éjection du système de manoeuvre d'apogée paraît exclue dans le cas d'un système à ergols liquides (surtout dans le cas d'une alimentation unifiée), compte tenu de ce que les ergols destinés à la propulsion d'apogée sont amenés à la tuyère d'apogée (orientée précisément selon l'axe d'autorotation) depuis des réservoirs situés à l'intérieur du corps du satellite par des tuyaux et qu'il n'est pas réaliste, pour des raisons d'étanchéité, de prévoir une coupure entre les réservoirs et la tuyère d'apogée en vue de l'éjection

EP 0 445 011 B1

de cette dernière.

La conception des satellites d'observation géostationnaire stabilisés en autorotation suppose donc de résoudre le problème technique suivant : comment y implanter les antennes, disposées axialement, le système de manoeuvre d'apogée à ergols liquides, classiquement disposé axialement, et le radiateur du système d'observation, classiquement disposé axialement, tout en respectant les contraintes découlant de l'autorotation du satellite (notamment, le système d'observation comporte classiquement des pièces optiques mobiles qu'il apparaît essentiel de maintenir aussi près que possible de l'axe d'autorotation pour les soustraire à d'éventuels efforts centrifuges rédhibitoires). Plus généralement, le problème est de concilier sur un satellite stabilisé en rotation, un système de propulsion axiale et deux équipements (ici une tour d'antennes et un radiateur) devant être disposés dans l'axe de rotation.

L'invention propose à cet effet, un satellite destiné à être stabilisé en autorotation sur une orbite géostationnaire comportant, coaxiaux à un axe d'autorotation, un corps de satellite entouré d'un générateur solaire cylindrique, un système de manoeuvre d'apogée disposé selon l'axe et deux équipements disposés axialement, caractérisé en ce que le système de manoeuvre d'apogée, fixé à demeure à l'opposé d'un des équipements, comporte une pluralité d'au moins deux tuyères orientées parallèlement à l'axe, mais décalées vis à vis de celui-ci d'une même distance, distribuées circonférentiellement de façon régulière autour de l'autre des équipements, ces tuyères étant reliées à un même système d'alimentation en ergols liquides.

On appréciera que, selon une caractéristiques de l'invention, originale en soi, on admet d'utiliser plusieurs tuyères ce qui permet la mise en oeuvre de tuyères déjà homologuées malgré l'augmentation de la masse des satellites.

Selon des dispositions préférées de l'invention, éventuellement combinées :
- ledit autre des équipements disposé entre les tuyères est un jeu d'antennes de communications,
- l'équipement à l'opposé duquel est fixé le système de manoeuvre d'apogée est un radiateur appartenant à un système d'observation à détecteurs infrarouges,
- selon une autre alternative, l'équipement à l'opposé duquel est fixé le système de manoeuvre d'apogée est le jeu d'antennes de communications, l'équipement situé entre les tuyères pouvant être le radiateur précité,
- les tuyères sont au nombre de deux, disposées de façon symétrique de part et d'autre de l'axe d'autorotation (au delà de deux tuyères on peut parler d'une couronne sensiblement régulière de tuyères),
- la distance de décalage des tuyères par rapport à l'axe vaut au moins la moitié du rayon du générateur solaire cylindrique,
- la distance de décalage des tuyères par rapport à l'axe vaut au moins les deux tiers du rayon du générateur cylindrique,
- le radiateur est recouvert par un couvercle éjectable,
- ce couvercle éjectable est une source froide, des réchauffeurs étant disposés autour du radiateur et destinés, lors de leur mise en oeuvre, de provoquer une décontamination de la partie inférieure du satellite,
- le couvercle éjectable est relié au corps de satellite, radialement à l'extérieur du radiateur, par des liaisons frangibles à commande pyrotechnique,
- des éléments élastiques de stockage d'énergie sont interposés axialement entre ce couvercle éjectable et le corps de satellite, adaptés à provoquer l'éjection du couvercle,
- ces éléments élastiques sont des ressorts à spirale comprimés axialement,
- un écran thermique est interposé entre le jeu d'antennes et les tuyères,
- cet écran thermique comporte des volets articulés adaptés à dégager le champ de vue des antennes vers la Terre après la manoeuvre d'apogée,
- le système d'alimentation en ergols liquides alimente également des tuyères de correction d'orbite et de contrôle d'attitude.

On appréciera qu'un tel concept à tuyères d'apogée multiples se heurtait a priori à des réticences rédhibitoires de la part de l'homme de métier. En particulier, la question se posait de savoir quel allait être le comportement du satellite lors des poussées conjuguées de deux tuyères ou plus en cas de désynchronisation éventuelle de ces poussées et/ou en cas de différences de décalage à l'axe des tuyères, voire en cas de différences d'amplitude desdites poussées. D'autre part, quelle était l'ampleur des modifications à apporter au système d'alimentation en ergols liquides du satellite pour lui permettre d'alimenter de manière fiable et synchronisée deux tuyères ou plus. Enfin, la localisation d'un équipement (tel que antennes ou radiateur) radiateur à proximité de la sortie des tuyères ne conduisait-elle pas à une pollution exagérée (contamination et effet thermique) du fait du fonctionnement desdites tuyères.

En fait, l'invention est fondée sur la rigidité gyroscopique du satellite, du fait de sa stabilisation en autorotation avant même les manoeuvres d'apogée, laquelle rigidité est apparue, après essais, tout à fait suffisante, dans le cas des satellites de deuxième génération, compte tenu des masse et vitesse de rotation qui leur sont

3

imposées, pour maintenir à des niveaux tout à fait acceptables les effets pervers dûs aux éventuels défauts de construction ou de fonctionnement précités concernant les tuyères.

Par ailleurs, l'invention a su reconnaître des modalités réalistes pour limiter, la pollution de l'équipement du fait des tuyères, dans le cas d'un radiateur grâce à l'obturation temporaire de ce dernier grâce à un couvercle éjectable de structure simple se contentant d'une super-isolation de type classique, ou plus généralement par des écrans éjectables ou articulés (volets qui se replient sur les tuyères après la manoeuvre d'apogée).

Il est apparu que l'utilisation de tuyères multiples permet d'atteindre la quasi-totalité du gain de masse obtenu pour d'autres types de satellite du fait du passage d'une propulsion à ergols solides à une propulsion à ergols liquides et tuyère unique.

Des objets, caractéristiques et avantages de l'invention ressortent de la description qui suit, donnée à titre d'exemple non limitatif, en regard des dessins annexés sur lesquels :
- la figure 1 est une vue schématique axiale, avec arrachement partiel, d'un satellite conforme à l'invention, selon la flèche I de la figure 2, dans le volume disponible dans un lanceur du type ARIANE,
- la figure 2 en est une autre vue axiale, selon la flèche II de la figure 1,
- la figure 3 en est une vue schématique en perspective,
- la figure 4 est une vue de détail agrandie de la partie basse de la figure 1,
- la figure 5 est un schéma hydraulique simplifié du circuit d'ergols liquides du système de manoeuvre d'apogée, de correction d'orbite et de contrôle d'attitude,
- la figure 6 est une vue schématique axiale avec arrachement partiel du système optique d'observation selon la flèche VI de la figure 7,
- la figure 7 en est une vue analogue selon la flèche VII de la figure 6,
- la figure 8 est une vue en coupe axiale du radiateur dudit système optique d'observation,
- la figure 9 est une figure schématique représentant ce radiateur équipé de son couvercle éjectable,
- la figure 10 est une vue similaire à la figure 1 mais correspondant à une variante dans laquelle les tuyères sont disposées autour de la tour d'antennes, et
- les figures 11 et 12 sont des vues similaires à celles des figures 2 et 3 correspondant à cette variante.

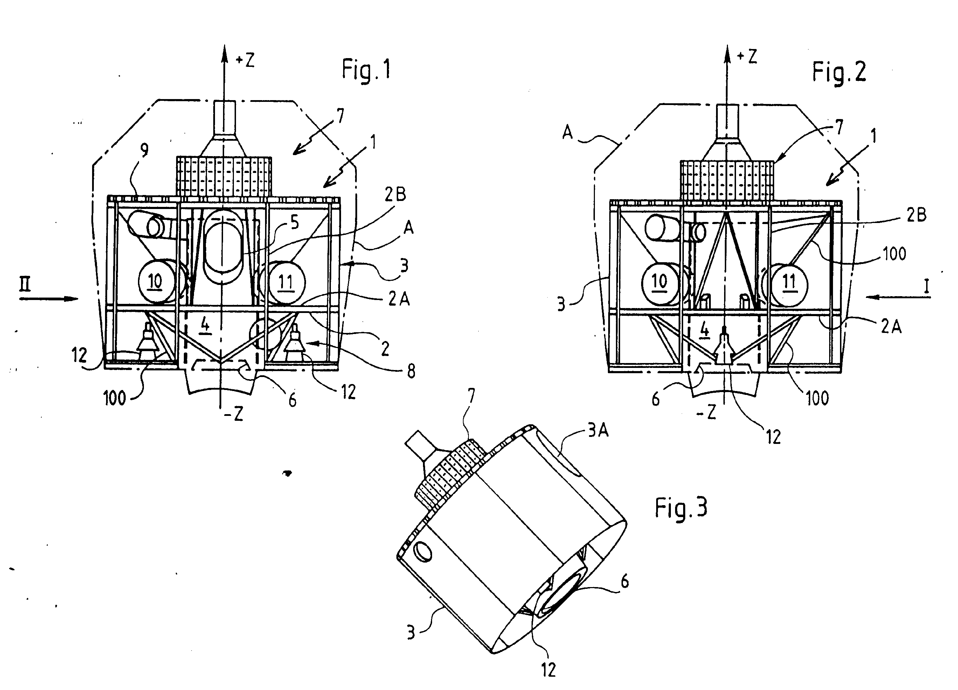

Les figures 1 à 3 représentent un satellite d'observation destiné à être stabilisé en autorotation autour d'un axe -Z+Z sur une orbite géostationnaire, désigné dans son ensemble par la référence 1.

A la figure 1, ce satellite est représenté dans une enveloppe en traits mixtes noté A, représentant le volume qui lui est attribué dans une structure porteuse et de lancement double du type ARIANE.

Ce satellite comporte principalement un corps noté 2 dans son ensemble entouré par une enveloppe cylindrique 3 recouverte de cellules solaires et constituant un générateur solaire, un système optique d'observation à infrarouges noté 4, muni d'un baffle d'entrée 5 disposé radialement et d'un radiateur 6 disposé sur une face transversale SUD du corps, un jeu d'antennes de télécommunication et de transmission d'images noté 7 dans son ensemble et disposé en saillie sur une face transversale NORD, opposée à la face transversale comportant le radiateur, et un système de propulsion d'apogée noté 8 dans son ensemble, et disposé axialement dans son ensemble.

Ainsi que cela ressort des figures 1 et 2, le corps de satellite 2, parfois appelé module de service, comporte classiquement une plate-forme principale 2A disposée transversalement et un tube 2B disposé axialement solidaire de cette plate-forme.

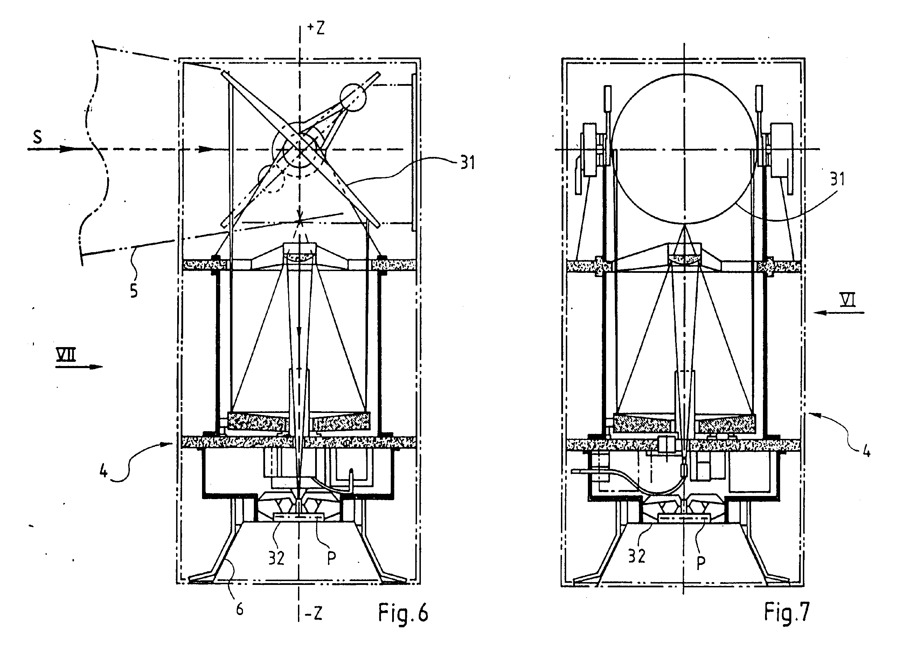

A l'intérieur de ce tube 2B est disposé le système d'observation 4 représenté plus en détail aux figures 6 et 7, le baffle 5, non représenté à la figure 2, traversant ce tube et étant disposé en regard d'une ouverture 3A ménagée dans le générateur solaire (voir figure 3).

A sa partie supérieure, ce corps de satellite 2 est fermé par une plate-forme supérieure 9 à laquelle sont assujetties les antennes 7. Ces antennes, ne faisant pas partie de la présente invention, ne seront pas détaillées plus avant ici ; elles sont de tout type connu approprié pour effectuer les missions de télécommunication et de transmission d'images imposées au satellite.

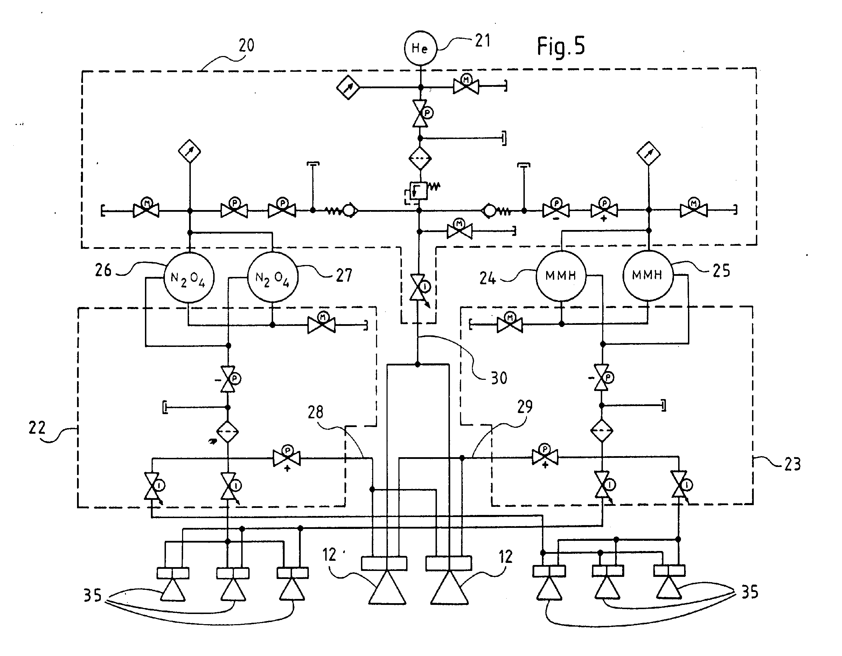

Autour du tube 2B est disposé le système de propulsion d'apogée 8. En fait, ce système comporte un circuit d'alimentation en ergols liquides unifié également connecté à des tuyères de contrôle d'attitude et de correction d'orbite de tout type connu approprié (représentées seulement à la figure 5 sous la référence 35).

Ce système de propulsion d'apogée 8, représenté en détail à la figure 5, comporte ainsi notamment des réservoirs d'ergols 10 et 11 maintenus en place dans le corps de satellite par diverses traverses de rigidification et de fixation de tout type connu approprié, dont certaines sont représentées aux figures 1, 2 et 4 sous la référence 100.

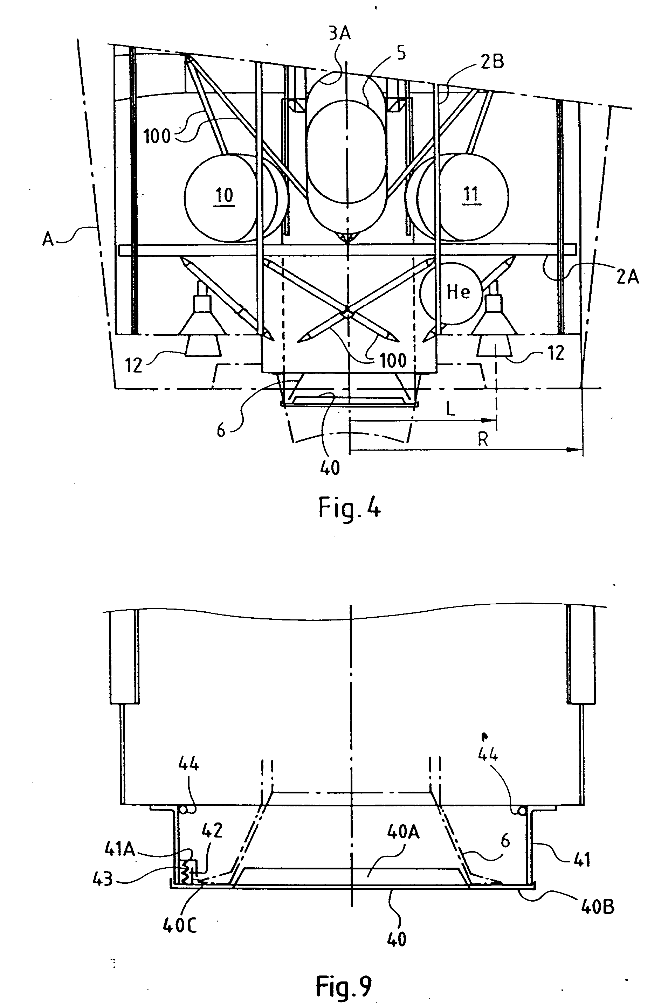

Ainsi qu'il ressort en détail à la figure 4, ce système de propulsion d'apogée 8 comporte non pas une tuyère unique disposée selon l'axe d'autorotation comme dans les satellites d'observation stabilisés en autorotation connus, mais une pluralité de tuyères identiques notées 12 disposées à des distances égales L de l'axe et distribuées angulairement de façon régulière autour de celui-ci. Dans l'exemple considéré, ces tuyères 12 sont au nombre de deux, disposées de façon symétrique par rapport à l'axe selon un diamètre, la distance L valant au moins la moitié du rayon R de l'enveloppe cylindrique constitutive du générateur solaire 3.

Ces tuyères sont sensiblement disposées au même niveau axialement que le radiateur 6 du système d'observation 4.

Dans l'exemple représenté ces tuyères 12 sont en fait légèrement en retrait vers l'intérieur du corps de satellite. Selon une variante non représentée, les tuyères sont encore plus décalées radialement vers l'extérieur (au moins 2/3 de R), mais moins en retrait vis à vis du radiateur qu'à la figure 4, compte tenu du volume disponible dans le lanceur.

Ainsi qu'il ressort de la figure 5, le circuit d'alimentation unifié en ergols liquides est très proche du circuit d'alimentation unifié classique connu dans le cas d'une tuyère d'apogée unique. Ce circuit comporte un étage de pressurisation 20 connecté à une source d'hélium 21 ainsi qu'un circuit d'alimentation 22 ou 23 spécifique de chacun des deux ergols liquides utilisés, ici de la monométhylhydrazine (en abrégé MMH) dans des réservoirs notés 24 et 25 et du peroxyde d'azote ($N_2O_4$) dans des réservoirs notés 26 et 27.

Des essais ont montré que le passage de une à deux tuyère(s) n'impliquait, pour un fonctionnement fiable, outre une simple duplication des lignes 28 et 29 d'alimentation en ergols et de la ligne 30 de pressurisation, qu'une légère augmentation de quelques pour cent du diamètre des lignes d'alimentation classiquement utilisées pour les tuyères d'apogée connues, de manière à compenser la chute de pression résultant de la division du flux d'ergols en deux branches.

Il est à noter que les tuyères 12 sont identiques aux tuyères classiques utilisées isolément dans les systèmes de propulsion d'apogée connus (en pratique des tuyères de poussée égale à 400 N).

Par rapport à un système classique à une seule tuyère, la pénalité en masse due à l'usage de deux tuyères au lieu d'une est d'environ 3,1 kg seulement (2,5 kg pour la tuyère additionnelle et environ 0,6 kg pour l'augmentation de diamètre des lignes), ce qui est négligeable par rapport au gain de masse (qui peut atteindre 200 kg environ) résultant du passage d'une propulsion par ergols solides à une propulsion par ergols liquides.

Ce circuit de la figure 5 étant très proche d'un circuit classique, aux réserves précitées près, il ne sera pas détaillé plus avant ici. Il est rappelé que les vannes marquées d'un P sont des pyrovalves, normalement fermées (+) ou normalement ouvertes (-) ; celles marquées d'un I sont des vannes de verrouillage à interrupteur de position (Latch Valve) ; celles marquées M sont des vannes manuelles normalement fermées avant le lancement.

Le système d'observation 4 est classique en soi et ce n'est qu'à titre de rappel qu'il est présenté aux figures 6 et 7.

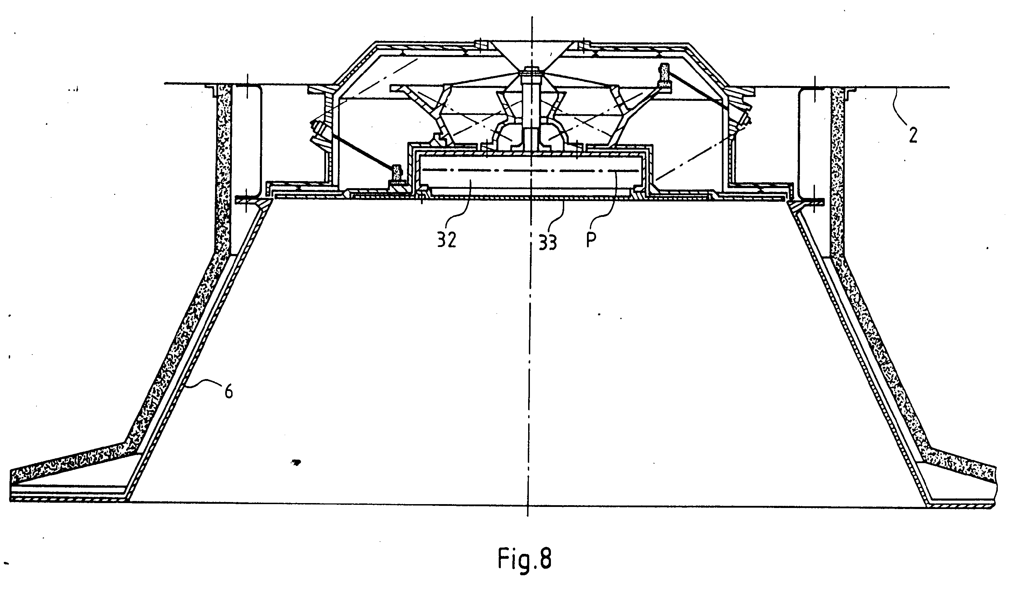

Il comporte principalement un miroir 30 qui renvoie un rayonnement incident S, parallèlement à l'axe, sur un plan de focalisation schématisé en P aux figures 6 à 8 situé dans un logement 32 contenant des détecteurs infrarouges de tout type connu approprié longeant une surface radiative transversale 33, par exemple recouverte d'une peinture blanche connue appropriée entourée par le radiateur tronconique 6.

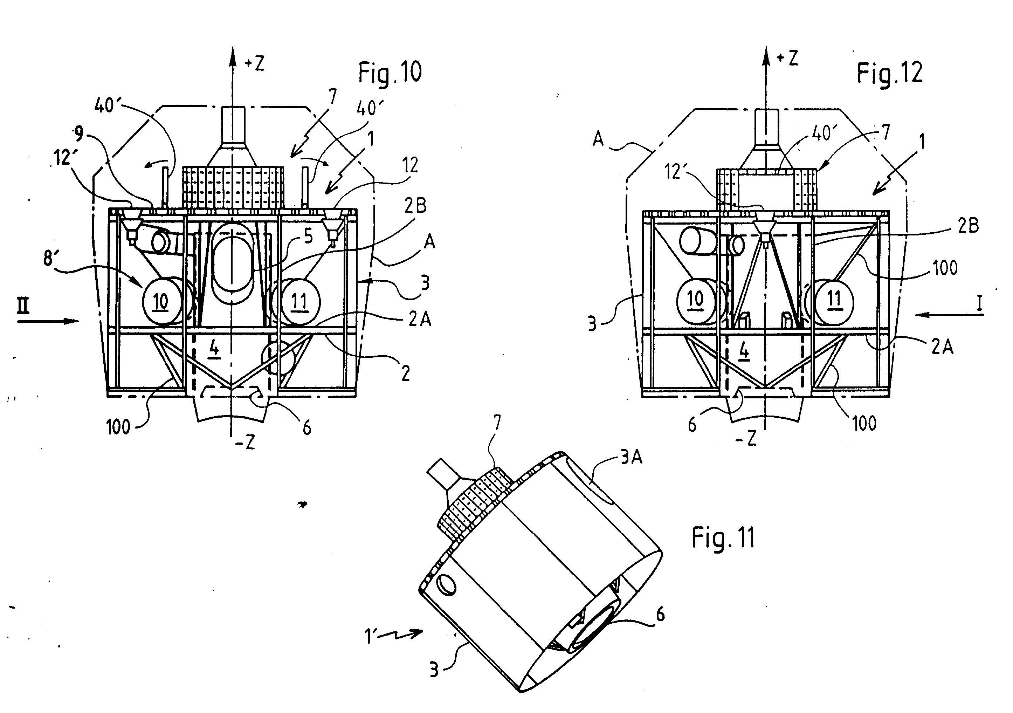

Pendant toute la phase de lancement et jusqu'après la fin de la manoeuvre d'apogée, le radiateur 6 est obturé par un couvercle éjectable 40 représenté schématiquement à la figure 9. Ce couvercle comporte une portion centrale épaisse 40A centrée dans le radiateur 6 et une couronne périphérique plus mince 40B reliée de manière temporaire à une couronne d'assujettissement 41 solidaire du corps de satellite et disposée autour du radiateur. La liaison du couvercle à la couronne d'assujettissement est assurée par des éléments 41A et 40C respectivement liés à cette couronne et à ce couvercle assujettis les uns aux autres par des goupilles à commande pyrotechnique schématisées en 42 à la figure 9.

L'éjection du couvercle est assurée par des organes élastiques 43 interposés axialement entre ce couvercle éjectable et la couronne périphérique et libérés lors de la commande pyrotechnique des goupilles précitées. Ces organes élastiques sont ici des ressorts à spirale comprimés axialement, disposés à proximité immédiate des éléments assujettis par les goupilles.

Ce couvercle est recouvert d'une super-isolation (il peut s'agir de manière classique d'un revêtement composite à base de feuilles de titane). Ce couvercle est utilisé comme source froide destinée à piéger la contamination provenant de la combustion des ergols ; à cet effet, la couche de super-isolation est avantageusement recouverte d'une couche de peinture blanche.

De même la couronne périphérique est recouverte d'une super-isolation ; il s'agit par exemple d'un matériau composite comportant une couche de titane parallèle à des couches de Kapton doublement aluminisées, et maintenues écartées les unes par rapport aux autres par des entretoises en fibre de verre. Des réchauffeurs repérés 44 sont disposés à proximité de la couronne périphérique (il s'agit par exemple de simples résistances chauffantes). Ces réchauffeurs ont pour fonction, après la fin de la manoeuvre d'apogée, de provoquer une vaporisation de la majeure partie des produits déposés provenant de la combustion des ergols, les gaz ainsi obtenus étant piégés par condensation par la source froide que constitue le couvercle.

A titre d'exemple, dans le cas d'une masse sèche de satellite de l'ordre d'une tonne et d'un système de propulsion à deux ergols liquides unifié NMH/N$_2$O$_4$ ces produits de combustion présentent typiquement l'analyse suivante :

- H$_2$0 : 90 mg
- N$_2$ : 125 mg
- CO : 50 mg
- H$_2$ : 5 mg
- CO$_2$ : 25 mg

La majeure partie de ces produits de combustion, étant piégée par le couvercle, est donc évacuée lors de l'éjection de celui-ci, typiquement 24 heures après la manoeuvre d'apogée, les réchauffeurs étant mis en oeuvre par exemple aussitôt la fin de cette manoeuvre.

Un devis de masse typique pour le système de la figure 9 est de :

- super-isolation : 750 g
- réchauffeurs : 500 g
- couvercle et ressorts : 2.500 g

Le tableau 1 recense les résultats obtenus pour divers cas de dissymétrie de structure ou de fonctionnement des tuyères 12.

Pour chacun des cas envisagés le tableau 1 indique l'amplitude du défaut considéré, la vitesse d'autorotation considérée, la nutation maximale observée, la perte d'incrément de vitesse et le décalage angulaire d'incrément de vitesse en résultant pour le satellite.

On notera qu'une différence de 5 mm entre les distances à l'axe des tuyères se traduit par des perturbations infimes.

Un écart angulaire de 0,5° sur le vecteur de poussée conduit de même à des perturbations infimes.

Dand le cas à la fois d'une différence de 5 mm entre les distances à l'axe des deux tuyères, d'un décalage angulaire de 1° du vecteur poussée et d'une dispersion de 16 N sur la poussée, on obtient une nutation maximale de 3,3°, une perte d'incrément de vitesse de 2,2 m/sec et un décalage angulaire d'incrément de vitesse obtenu de 0,36°, ce qui correspond à des perturbations tout à fait acceptables et corrigeables par la suite. Il est rappelé que l'incrément de vitesse nominal est typiquement de l'ordre de 1500 m/sec.

Les résultats précités correspondent à des vitesses d'autorotation de 15 t/min, ce qui est très en deçà des vitesses d'autorotation prévues pour les satellites de deuxième génération, qui peuvent atteindre 100 t /min.

On a même envisagé le cas où l'une des tuyères tomberait en panne ce qui se traduirait par un bras de levier sensible : à 15 t/min, les perturbations découlant d'une telle panne deviennent importantes mais dès lors que la vitesse de rotation approche les 50 t/min les perturbations reviennent dans des limites admissibles.

Il est clair d'après les essais de ce tableau 1 que la rigidité gyroscopique associée aux vitesses d'autorotation de consigne est suffisante pour maintenir à un niveau acceptable les perturbations susceptibles d'intervenir du fait de la mise en oeuvre d'une pluralité de tuyères, sans qu'il soit nécessaire de prendre des précautions toutes particulières pour s'assurer de la précision de montage et de fonctionnement de ces tuyères.

Les figures 10 à 12 correspondent à une variante d'implantation des tuyères, dans laquelle ces dernières repérées 12' sont situées non plus autour de l'équipement que constitue le radiateur, mais autour de l'équipement disposé sur la face opposée, à savoir la tour d'antennes.

Sur ces figures 10 à 12, les éléments analogues à ceux des figures 1 à 3 ont les mêmes signes de référence, avec toutefois addition d'un indice "prime" lorsque ces éléments présentent des différences, soit par leur structure globale, soit par leur implantation.

La protection de l'équipement, ici constitué par la tour 7, vis à vis des jets des tuyères d'apogée (impact thermique, pollution ...) est ici obtenue par un écran thermique de tout type connu approprié, noté 40' dans son ensemble, dont les éléments constitutifs sont munis d'un revêtement composite à base de titane, par exemple.

Ces éléments peuvent être fixes ou amovibles.

A titre d'exemple préféré, ces éléments sont des volets articulés interposés entre les tuyères et la tour d'antenne, adaptés en configuration déployée (représentée) à protéger la tour (à un moment où elle n'est pas utile) et, après la manoeuvre d'apogée, à se rabattre (transversalement à l'axe) contre le corps de satellite, en venant éventuellement obturer les tuyères d'apogée dont le rôle est terminé et en dégageant le champ de vue des antennes vers la Terre.

Il va de soi que la description qui précède n'a été proposée qu'à titre d'exemple non limitatif et que de nombreuses variantes peuvent être proposées par l'homme de l'art sans sortir du cadre de l'invention.

T A B L E A U   I

| SOURCE DE PERTURBATION | AMPLITUDE | VITESSE D'AUTORATION t/m | NUTATION MAXIMALE (°) | PERTE D'INCREMENT DE VITESSE m/s | DECALAGE ANGULAIRE D'INCREMENT DE VITESSE (°) |
|---|---|---|---|---|---|
| ECART DE DECALAGE DES TUYERES PAR RAPPORT A l'AXE | + 5 mm | 15 | 0.6 | 0.3 | 0.06 |
| ECART ANGULAIRE DE POUSSEE | 0.5° | 15 | 0.2 | 0.2 | 0.02 |
| PANNE D'UNE TUYERE | | 15 | 44 | 144 | 9.6 |
| PANNE D'UNE TUYERE | | 50 | 5,2 | 1.7 | 0.78 |
| EN COMBINAISON<br>- écart de décalage<br>- écart angulaire<br>- différence de poussée | + 5 mm<br>1°<br>16 N | 15 | 3,3 | 2,2 | 0.36 |

EP 0 445 011 B1

**Revendications**

1. Satellite (1, 1') destiné à être stabilisé en autorotation sur une orbite géostationnaire comportant, coaxiaux à un axe d'autorotation (-Z+Z), un corps de satellite (2) entouré d'un générateur solaire cylindrique (3), un système de manoeuvre d'apogée (8, 8') disposé selon l'axe et deux équipements (7, 6) disposés axialement, caractérisé en ce que le système de manoeuvre d'apogée comporte à l'opposé de l'un des équipements une pluralité d'au moins deux tuyères (12, 12') orientées parallèlement à l'axe, mais décalées vis à vis de celui-ci d'une même distance (L), distribuées circonférentiellement de façon régulière autour de l'autre des équipements, ces tuyères étant reliées à un même système d'alimentation en ergols liquides (20-30).

2. Satellite selon la revendication 1, caractérisé en ce que ledit autre des équipements disposé entre les tuyères (12) est un radiateur (6) appartenant à un système d'observation à détecteurs infrarouges.

3. Satellite selon la revendication 1 ou la revendication 2, caractérisé en ce que l'équipement (7) à l'opposé duquel est monté le système de manoeuvre d'apogée (8) est un jeu d'antennes de communications.

4. Satellite selon la revendication 1, caractérisé en ce que ledit autre des équipements disposé entre les tuyères (12') est un jeu d'antennes de communications.

5. Satellite selon la revendication 4, caractérisé en ce que l'équipement à l'opposé duquel est monté le système de manoeuvre d'apogée (8') est un radiateur (6) appartenant à un système d'observation à détecteurs infrarouges.

6. Satellite selon l'une quelconque des revendications 1 à 5, caractérisé en ce que les tuyères sont au nombre de deux, disposées de façon symétrique de part et d'autre de l'axe d'autorotation.

7. Satellite selon l'une quelconque des revendications 1 à 6, caractérisé en ce que la distance de décalage des tuyères par rapport à l'axe vaut au moins la moitié du rayon du générateur cylindrique.

8. Satellite selon la revendication 7, caractérisé en ce que la distance de décalage des tuyères par rapport à l'axe vaut au moins les deux tiers du rayon du générateur cylindrique.

9. Satellite selon l'un quelconque des revendications 1 à 8, caractérisé en ce que le radiateur est recouvert par un couvercle éjectable (40).

10. Satellite selon la revendication 9, caractérisé en ce que ce couvercle éjectable est une source froide, des réchauffeurs (44) étant disposés autour du radiateur et destinés, lors de leur mise en oeuvre, de provoquer une décontamination de la partie inférieure du satellite.

11. Satellite selon la revendication 9 ou la revendication 10, caractérisé en ce que le couvercle éjectable (40) est relié au corps de satellite, radialement à l'extérieur du radiateur, par des liaisons frangibles à commande pyrotechnique (40C, 40A, 42).

12. Satellite selon l'une quelconque des revendications 9 à 11, caractérisé en ce que des éléments élastiques de stockage d'énergie (43) sont interposés axialement entre ce couvercle éjectable et le corps de satellite, adaptés à provoquer l'éjection du couvercle,

13. Satellite selon la revendication 12, caractérisé en ce que ces éléments élastiques (43) sont des ressorts à spirale comprimés axialement.

14. Satellite selon la revendication 4 ou la revendication 5, caractérisé en ce qu'un écran thermique (40') est interposé entre le jeu d'antennes et les tuyères.

15. Satellite selon la revendication 14, caractérisé en ce que cet écran thermique comporte des volets articulés adaptés à dégager le champ de vue des antennes vers la Terre après la manoeuvre d'apogée.

16. Satellite selon l'une quelconque des revendications 1 à 15, caractérisé en ce que le système d'alimentation en ergols liquides alimente également des tuyères de corection d'orbite et de contrôle d'attitude.

**Patentansprüche**

1. Satellit (1, 1'), der dazu bestimmt ist, auf einem geostationären Orbit autorotationsstabilisiert zu werden, und koaxial zu einer Autorotationsachse (-Z+Z) einen von einem zylindrischen Solargenerator (3) umgebenen Satellitenkörper (2), ein in der Achse angeordnetes Apogäumsmanöversystem (8, 8') und zwei axial angeordnete Ausrüstungen (7, 6) umfaßt, dadurch gekennzeichnet, daß das Apogäumsmanöversystem auf der einer der Ausrüstungen entgegengesetzten Seite eine Gruppe von wenigstens zwei Düsen (12, 12') umfaßt, die parallel zur Achse gerichtet, jedoch bzgl. dieser um den gleichen Abstand (L) versetzt sind, auf dem Umfang regelmäßig um die andere der Ausrüstungen herum verteilt sind und mit einem gemeinsamen System (20-30) zur Versorgung mit Flüssigtreibstoff verbunden sind.

2. Satellit nach Anspruch 1, dadurch gekennzeichnet, daß die andere, zwischen den Düsen (12) angeordnete Ausrüstung ein Kühler (6) ist, der zu einem Beobachtungssystem mit Infrarotsensoren gehört.

3. Satellit nach Anspruch 1 oder 2, dadurch gekennzeichnet, daß die Ausrüstung (7), bezüglich der das Apogäumsmanöversystem (8) auf der entgegengesetzten Seite montiert ist, ein Satz von Kommunikationsantennen ist.

4. Satellit nach Anspruch 1, dadurch gekennzeichnet, daß die andere, zwischen den Düsen (12') angeordnete Ausrüstung ein Satz von Kommunikationsantennen ist.

5. Satellit nach Anspruch 4, dadurch gekennzeichnet, daß die Ausrüstung, bezüglich der das Apogäumsmanöversystem (8') auf der entgegengesetzten Seite montiert ist, ein Kühler (6) ist, der zu einem Beobachtungssystem mit Infrarotsensoren gehört.

6. Satellit nach einem der Ansprüche 1 bis 5, dadurch gekennzeichnet, daß zwei Düsen vorgesehen sind, die symmetrisch zu beiden Seiten der Autorotationsachse angeordnet sind.

7. Satellit nach einem der Ansprüche 1 bis 6, dadurch gekennzeichnet, daß der Abstand, um den die Düsen bzgl. der Achse versetzt sind, wenigstens gleich der Hälfte des Radius des zylindrischen Generators ist.

8. Satellit nach Anspruch 7, dadurch gekennzeichnet, daß der Abstand, um den die Düsen bzgl. der Achse versetzt sind, wenigstens gleich zwei Dritteln des Radius des zylindrischen Generators ist.

9. Satellit nach einem der Ansprüche 1 bis 8, dadurch gekennzeichnet, daß der Kühler mit einem ausstoßbaren Deckel (40) bedeckt ist.

10. Satellit nach Anspruch 9, dadurch gekennzeichnet, daß der ausstoßbare Deckel eine Kältequelle ist, wobei um den Kühler herum Heizeinrichtungen (44) angeordnet sind, die dazu bestimmt sind, bei ihrem Einsatz eine Dekontaminierung des unteren Teils des Satelliten zu bewirken.

11. Satellit nach Anspruch 9 oder 10, dadurch gekennzeichnet, daß der ausstoßbare Deckel (40) mit dem Satellitenkörper radial außerhalb des Kühlers durch Bruchverbindungen mit pyrotechnischer Betätigung (40C, 40A, 42) verbunden ist.

12. Satellit nach einem der Ansprüche 9 bis 11, dadurch gekennzeichnet, daß axial zwischen dem ausstoßbaren Deckel und dem Satellitenkörper elastische Energiespeicherelemente (43) eingesetzt sind, die den Ausstoß des Deckels bewirken können.

13. Satellit nach Anspruch 12, dadurch gekennzeichnet, daß die elastischen Elemente (43) axial komprimierte Spiralfedern sind.

14. Satellit nach Anspruch 4 oder 5, dadurch gekennzeichnet, daß zwischen den Antennensatz und die Düsen ein Hitzeschirm (40') eingesetzt ist.

15. Satellit nach Anspruch 14, dadurch gekennzeichnet, daß der Hitzeschirm gelenkige Klappen umfaßt, die das Blickfeld der Antennen auf die Erde nach dem Apogäumsmanöver freilegen.

16. Satellit nach einem der Ansprüche 1 bis 15, dadurch gekennzeichnet, daß das System zur Versorgung mit Flüssigtreibstoff auch Orbitkorrektur- und Lagesteuerdüsen speist.

## Claims

1. Satellite (1, 1') intended to be spin-stabilised in geostationary orbit comprising, coaxial with a spin-rotation axis (-Z+Z), a satellite body (2) surrounded by a cylindrical solar generator (3), an apogee manoeuvre system (8, 8') disposed along the axis and two axially disposed items of equipment (7, 6), characterised in that the apogee manoeuvre system comprises, opposite one of the items of equipment, a plurality of at least two thrusters (12, 12') oriented parallel to the axis but offset relative thereto by the same distance (L), evenly spaced around the circumference of the other one of the items of equipment, these thrusters being connected to a common liquid ergol alimentation system (20-30).

2. Satellite according to Claim 1, characterised in that the said other item of equipment disposed between the thrusters (12) is a radiator (6) belonging to an infrared sensor observation system.

3. Satellite according to Claim 1 or Claim 2, characterised in that the item of equipment (7) opposite which the apogee manoeuvre system (8) is mounted is a set of communication antennae.

4. Satellite according to Claim 1, characterised in that the said other item of equipment disposed between the thrusters (12') is a set of communication antennae.

5. Satellite according to Claim 4, characterised in that the item of equipment opposite which the apogee manoeuvre system (8') is mounted is a radiator (6) belonging to an infrared sensor observation system.

6. Satellite according to any one of Claims 1 to 5, characterised in that the thrusters are two in number and are disposed symmetrically on opposite sides of the spin-rotation axis.

7. Satellite according to any one of Claims 1 to 6, characterised in that the distance by which the thrusters are offset from the axis is at least half the radius of the cylindrical generator.

8. Satellite according to Claim 7, characterised in that the distance by which the thrusters are offset from the axis is at least two thirds of the radius of the cylindrical generator.

9. Satellite according to any one of Claims 1 to 8, characterised in that the radiator is covered by a jettisonable cover (40).

10. Satellite according to Claim 9, characterised in that this jettisonable cover is a cold source, heaters (44) being disposed around the radiator and being intended, when activated, to decontaminate the lower part of the satellite.

11. Satellite according to Claim 9 or Claim 10, characterised in that the jettisonable cover (40) is connected to the satellite body, radially outside the radiator, by pyrotechnically actuated breakable links (40C, 40A, 42).

12. Satellite according to any one of Claims 9 to 11, characterised in that energy-storing elastic members (43) are interposed axially between this jettisonable cover and the satellite body and are adapted to jettison the cover.

13. Satellite according to Claim 12, characterised in that these elastic members (43) are axially compressed spiral springs.

14. Satellite according to Claim 4 or Claim 5, characterised in that a heat shield (40') is disposed between the set of antennae and the thrusters.

15. Satellite according to Claim 14, characterised in that this heat shield includes articulated flaps adapted to open up the field of view of the antennae towards the Earth after the apogee manoeuvre.

16. Satellite according to any one of Claims 1 to 15, characterised in that the liquid ergol feed system also feeds orbit-correction and attitude-control thrusters.

Fig.1

Fig.2

Fig.3

Fig. 4

Fig. 9

Fig.5

Fig.6

Fig.7

EP 0 445 011 B1

Fig.8

EP 0 445 011 B1

Fig.10

Fig.12

Fig.11

EP 0 445 011 B1